# EUROPEAN PATENT APPLICATION

(11) **EP 1 520 684 A1**
(43) Date of publication of application: **06.04.2005**
(21) Application number: 03256272.0
(22) Date of filing: 03.10.2003
(51) Int. Cl.: B29C 65/34, B29C 65/36, F16L 47/03

(54) **Welding assembly**

(71) Applicant: Uponor Innovation AB, 513 81 Fristad (SE)
(72) Inventor: Nousiainen, Lauri, 15550 Nastola (FI)
(74) Representative: Harrison Goddard Foote

(57) **Abstract**

A welding assembly for forming a welded joint between plastics articles, the assembly comprising first and second inter-connectable plastics articles (1,2), wherein at least a first of said inter-connectable plastics articles is formed from an expandable thermoplastic material, and wherein a welding element (9) is disposed between said first and second plastics articles (1,2), whereby when said welding element (9) is activated at least a surface layer of said first plastics article expands to reduce any void space between said first and said second plastics articles (1,2) in a welding region, and said first and said second plastics articles (1,2) are fused together to form a welded joint.

## Description

This invention relates to welding assemblies, and more particularly to a welding assembly adapted to form a welded joint between plastics articles and to a method of forming a welded joint between plastics articles.

The use of a welding element for forming a welded joint between plastics articles, for example, plastics pipes and fittings therefor is well known. The welding element is interposed between adjacent surfaces of the plastics articles and activated in order to heat the surfaces so that fusion of the surface layers of the plastics articles can take place. Typically such a welding element takes the form of an electrical resistance coil, wire or strip, for example, as disclosed in US 3061503.

A problem with such methods is that it is difficult to obtain sufficient flow of thermoplastic material to fill any voids which may exist between the adjacent surfaces, which leads to a poor weld of low strength. It has been proposed to coat the welding element with a thermoplastic material, for example, as disclosed in US3049465, US4436988, US5320679 and US6149756, in order that the thermoplastic material can flow and fill the voids between the welded surfaces. Despite this expedient, void filling of welded pipe joints is still a problem, because the size of the welding element is necessarily increased, requiring the provision of a larger gap between the weldable surfaces.

It has also been proposed in US4090899 to provide an expanding agent in the welding zone to generate a gas pressure therein for promoting coalescence of the weld. As illustrated in US4090899, the welding element is embedded in the thermoplastic material of a fitting, sleeve or tube end, and the expanding agent is distributed within the thermoplastic material, between the thermoplastic material and the adjacent tube or sleeve surface, or between the welding element and the thermoplastic material as a wire coating. Other suggested possibilities are that the sleeve or tube ends may contain the expanding agent as a coating, an inlay, or an overlay. Such measures require the manufacture of special fittings and add to the expense of jointing.

In US4508368 there is described a joint configuration for joining two articles of thermoplastics material by thermal bonding using an electrical heating element, wherein a female fitting having a portion with an enlarged diameter receives the end of an inserted pipe on two raised portions constituting lands on the inner diameter of the fitting, and the central annular recess between the two lands receives and positions the electrical heating element which fuses the thermoplastic material. The two lands, each compressed against the outside of the inserted pipe by an external clamp, confine and retain the fused thermoplastic material within the central annular recess to effect an increased internal pressure which promotes the formation of an bond between the fitting and the inserted pipe. The electrical heating element comprises a heating coil that is covered by a thermoplastic sheath that fuses to fill voids between the fitting and the inserted pipe. Even with external pressure applied by a clamp, however, it is difficult to obtain a sound welded joint using this joint configuration, because there is not sufficient flow of fused material within the annular recess to provide the necessary pressure.

A further problem with known welding elements is short-circuiting at the terminal connections and excessive power consumption.

It would accordingly be desirable to provide an improved welding assembly that is more economic to manufacture and operate.

In a first aspect, the present invention provides a welding assembly for forming a welded joint between plastics articles, the assembly comprising first and second inter-connectable plastics articles, wherein at least a first of said inter-connectable plastics articles is formed from an expandable thermoplastic material, and wherein a welding element is disposed between said first and second plastics articles, whereby when said welding element is activated at least a surface layer of said first plastics article expands to reduce any void space between said first and said second plastics articles in a welding region, and said first and said second plastics articles are fused together to form a welded joint.

In a second aspect, the invention provides a method of forming a welded joint between first and second inter-connectable plastics articles, wherein at least a first of said inter-connectable plastics articles is formed from an expandable thermoplastics material, which comprises disposing between said first and second plastics articles a welding element and activating the welding element whereby at least a surface of said first plastics article expands to reduce any void space between said first and said second plastics articles in a welding region and said first and said second plastics articles are fused together to form a welded joint.

Also included in the invention is a welded joint produced from an assembly according to the invention and/or using a method of the invention.

The invention is applicable to a broad range of plastics articles, especially where the assembly comprises inter-connectable male and female components.

The invention is particularly applicable to cylindrical plastics articles, and, for example, the first and second plastics articles can be first and second pipe members or a pipe member and a fitting therefor. In one preferred embodiment, the assembly can comprise a female pipe end adapted to receive a mating male pipe end therein, as for example, in a bell and spigot joint between lengths of water or sewer pipes. In other preferred embodiments the assembly can comprise a pipe end and a pipe coupler, connector, pipe bend, tee piece, end cap, or other fitting, or an adaptor disposed between plain pipe ends. A particularly preferred assembly comprises a pipe end and a pipe coupler, wherein the pipe coupler is formed from an expandable thermoplastic material.

The first inter-connectable plastics article is formed from an expandable thermoplastic material which can be, for example, a foamed or foamable thermoplastic material. Such materials contain a gas, or a compound or compounds capable of producing a gas, which is incorporated into the thermoplastic material melt during fabrication. The thermoplastic material is then allowed to cool and solidify. The gas, often nitrogen, may be directly injected under pressure into the melt or it may be produced by the evaporation of a low boiling point liquid, for example a lower alkane such as n-butane, n-pentane or n-hexane.

Alternatively, and more commonly, a chemical foaming agent is used. Here the gas is produced in situ by the chemical decomposition of the foaming agent.

The use of a heat sensitive chemical foaming agent is the preferred method of forming an expandable thermoplastic material for use in the present invention. Preferably the foaming agent is selected such that thermal decomposition of the foaming agent occurs at the welding or fusion temperature of the thermoplastic material to produce a volume of gas under pressure. On activating the welding element, the adjacent expandable thermoplastic material melts and the gas expands, forming a foamed thermoplastic material and filling any voids between the first and second plastics articles in the weld region. A wide variety of chemical foaming agents, decomposing at different melt temperatures can be used. Examples are sodium bicarbonate, ammonium bicarbonate, ammonium carbonate, citric acid/sodium bicarbonate, azodicarbonamide, dinitrosopentamethylenetetramine, azodicarbonamide, dinitrosopentamethylenetetramine, 4,4-oxy-bis-(benzenesulphonylhydrazide), trihydrazinotriazine and N, N-dimethyl-N,N-dinitrosoterephthalamide.

Where the expandable thermoplastic material is foamed, the expansion can be due to the increase in volume of the pores of the foam when the foamed material is heated and softened.

The invention is especially applicable to inter-connectable plastics articles wherein at least a first of said articles is formed by low-pressure injection moulding techniques. In such moulding techniques it is known to add a foaming agent to the thermoplastic material, in order to avoid sink marks, and to obviate the need to use high pressure. Such injection-moulded products can readily be manufactured with closed pores within the thermoplastic material, or with un-used foaming agent contained within the thermoplastic material. In this preferred embodiment there is therefore no need to devise any special manufacturing technique for the first inter-connectable plastics article, since the low-pressure injection moulding technique enables such articles to be produced without any significant modification to the standard moulding method.

In general it will be sufficient if one of the inter-connectable plastics articles comprises an expandable thermoplastic material, although the invention encompasses the possibility that both the first and the second plastics articles comprise an expandable thermoplastic material. Preferably the expandable thermoplastic material comprises from about 0.001% to 5% by weight, more preferably from 0.01% to 1.0% by weight of a solid chemical foaming agent.

In this specification the term "thermoplastic material" also includes thermoplastic materials that have been cross-linked to an extent that they are still weldable by fusion techniques. Such cross-linked thermoplastic materials can be up to around 90% cross-linked, for example from 5% to 75% cross-linked, and include especially cross-linked polyethylene (PEX).

The welding element is preferably an electrical heating element, and may be an electrical resistance or an induction heating element. The welding element can, for example, comprise one or more electrical conductor elements, for example a metal wire, coil, ring, mesh, strip, perforated strip, or other suitably shaped electrically conductive member. A particular advantage of the present invention is that the welding element can be flexible and can readily conform to any gap between the adjacent surfaces of the plastics articles. A particularly advantageous embodiment of a welding element comprises a wire formed into a serpentine configuration.

The electrical conductor elements may be energised, for example, by passage of an electric current therethrough, or by inductive heating, in order to cause localised melting or softening of the adjacent surfaces of said first and second plastics articles and form a fusion bond there between.

The welding element may be simply sandwiched between adjacent surfaces of the first and second plastics articles, or it may be located in a recess defined by adjacent surfaces of the first and second plastics articles. However, the use of a "bare" welding element can obviate the need for a specially machined recess between the first and second plastics articles because in preferred embodiments its low profile and flexibility can enable it simply to take up the manufacturing tolerance between the first and second plastics articles. Thus, for example, in certain embodiments, standard bell and spigot pipe joints can be connected by welding, without modification. In addition, the need for the welding element to be embedded or integrated in a surface layer of one or other of the first and second plastics articles is obviated. Furthermore, the welding element can be inexpensive to produce, because there is no need to manufacture a special welding ring in which the welding element is embedded in an injection moulded thermoplastic material. The expression "disposed between" in this specification is used in the sense that the welding element is located close enough to adjacent surfaces of the first and second plastics materials such that when activated it can heat the adjacent surfaces to a temperature sufficient to promote welding. Whilst the use of a bare welding element in the invention is normally preferred, the use of an electrical conductor with an insulating coating, for example, of thermoplastic material, is not excluded provided the coated conductor is sufficiently flexible to conform to the available space between the adjacent surfaces of the plastics articles.

In a particularly preferred embodiment, the welding element is an electrical heating element which is in two parts, connected in parallel, and which extend around opposite sides of the assembly. For example, the two parts of the welding element can extend around the circumferential joint region of two cylindrical inter-connectable plastics articles on opposite sides of the diameter thereof. With such an arrangement, short circuit protection is generally unnecessary and insulation may not be required on the connector ends. This arrangement has the additional benefit of reducing the total resistance to one quarter of the resistance of a simple cylindrical heating element, enabling less expensive, higher specific resistance, materials to be used and permitting the use of lower voltages and longer heating times.

Whilst the invention can be realised without any special coating on the welding element, i.e. only a bare wire or strip can be used, if there should be a need for additional void filling, the welding element can be provided with additional void filling material. Thus, for example, the welding element can be interposed between two adhesive thermoplastic tape surfaces and added thermoplastics material and/or foaming agent in granule or powder form incorporated therebetween. The thermoplastic tape will of course readily melt and flow during the welding process.

In a further embodiment of the present invention, one or both of the inter-connectable plastics articles may be made heat recoverable in order to provide further joint pressure during the welding step. Heat recoverable articles in their most common form comprise a heat-shrinkable tubular member made from a polymeric material exhibiting the property of elastic or plastic memory as described, for example, in U.S. Pat. Nos. 2,027,962, 3,086,242 and 3,597,372. As is made clear in, for example, U.S. Pat. No. 2,027,962, the original dimensionally heat-stable form may be a transient form in a continuous process in which, for example, a tubular member is expanded, whilst hot, to a dimensionally heat-unstable form but, in other applications, a performed dimensionally heat stable article is deformed to a dimensionally heat unstable form in a separate stage.

In other heat recoverable articles, an elastomeric member is held in a stretched state by a second member, which, upon heating weakens and thus allows the elastomeric member to recover. Heat-recoverable articles of this type are described, for example, in British Patent No. 1,440,524 in which an outer tubular elastomeric member is held in a stretched state by an inner tubular member.

The invention is particularly applicable to the jointing of large diameter plastics pipes, for example, sewer pipes and the like. Such pipes can have a diameter of 450 mm or greater.

An embodiment of the invention will now be described, by way of example only, with reference to the accompanying Drawings in which:
Figure 1 shows a perspective view of male and female mating pipe ends;
Figure 2 shows a perspective view of the male pipe end of Figure 1 with a welding element installed;
Figure 3 shows a partial scrap view in section of an assembly according to the invention; and
Figure 4 shows the assembly of Figure 3 after welding.

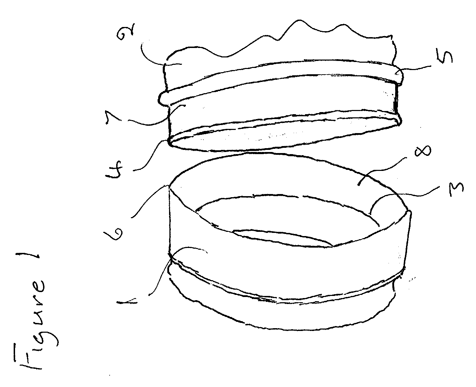

Referring to firstly to Figure 1, there is shown a female pipe end 1, and, mateable therewith, a male pipe end 2. Pipe ends 1 and 2 are manufactured from polyethylene by low pressure injection moulding, using a carbonate based foaming agent. Each contain minute pores (not shown) together with a quantity of up to about 1.0 % of un-reacted foaming agent.

The female pipe end 1 has a land 3, which engages with a lip 4 on the male pipe end 2 when the pipe ends 1 and 2 are inter-engaged. Similarly, the male pipe end 2 has a rib 5, which engages with a lip 6 on the female pipe end 1. A circumferential surface 7 on the male pipe end 2 is adapted to be a loose fit against the internal surface 8 of the female pipe end 1.

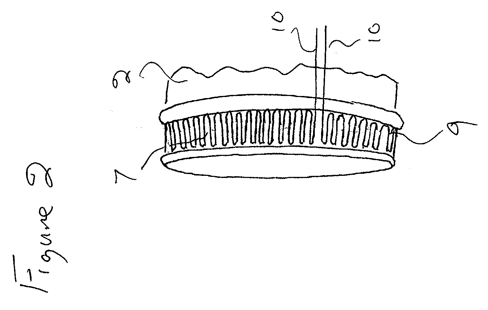

Turning now to Figure 2, the male pipe end 2 is shown with a flexible welding element 9 wrapped around its circumference. The welding element 9 comprises a bare electrical resistance wire bent into a serpentine form. The welding element 9 is disposed on the surface 7 and is provided with connector wires 10.

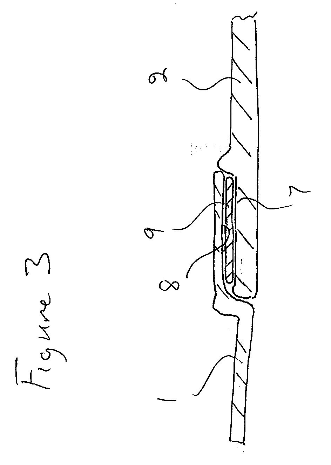

Figure 3 shows the assembled pipe ends with the welding element 9 in position. The dimensions of the surface 7 and the internal surface 8 are such that the low profile welding element 9 is firmly gripped between them.

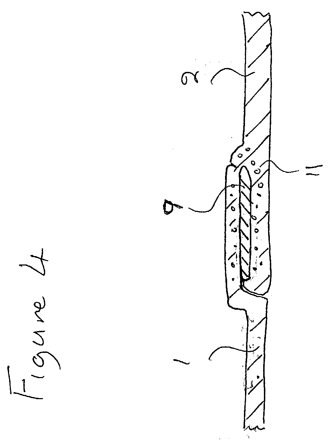

Figure 4 shows the assembled joint after activation of the welding element 7. It can be seen that thermoplastic polyethylene material from the pipe ends 1 and 2 has melted and flowed around the welding element 9, forming a sound, fluid-tight joint. Pores 11 in the polyethylene material show the influence of the foaming agent in expanding the thermoplastic material in the joint region to fill any voids which may have existed between the surface 7 on the pipe end 2 and the internal surface 8 of the pipe end 1 prior to welding.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A welding assembly for forming a welded joint between plastics articles, the assembly comprising first and second inter-connectable plastics articles, wherein at least a first of said inter-connectable plastics articles is formed from an expandable thermoplastic material, and wherein a welding element is disposed between said first and second plastics articles, whereby when said welding element is activated at least a surface layer of said first plastics article expands to reduce any void space between said first and said second plastics articles in a welding region, and said first and said second plastics articles are fused together to form a welded joint.

2. An assembly according to claim 1, which comprises inter-connectable male and female components.

3. An assembly according to claim 1 or 2, wherein the first and second plastics articles are cylindrical.

4. An assembly according to any one of the preceding claims, wherein the first and second plastics articles are first and second pipe members.

5. An assembly according to any one of claims 1 to 3, wherein the first and second plastics articles are respectively a pipe fitting and a pipe member.

6. An assembly according to any one of claims 1 to 3 and 5, which comprises a pipe end and a pipe coupler, wherein the pipe coupler is formed from an expandable thermoplastic material.

7. An assembly according to any of the preceding claims, wherein the expandable thermoplastic material is a foamed thermoplastic material.

8. An assembly according to any one of claims 1 to 6, wherein the expandable thermoplastic material is a foamable thermoplastic material.

9. An assembly according to claim 8, wherein the expandable thermoplastics material comprises a heat sensitive chemical foaming agent.

10. An assembly according to claim 9, wherein the chemical foaming agent is sodium bicarbonate, ammonium bicarbonate, ammonium carbonate, citric acid/sodium bicarbonate, azodicarbonamide, dinitrosopentamethylenetetramine, azodicarbonamide, dinitrosopentamethylenetetramine, 4,4-oxy-bis-(benzenesulphonylhydrazide), trihydrazinotriazine and N, N-dimethyl-N,N-dinitrosoterephthalamide.

11. An assembly according to any one of the preceding claims, wherein the first inter-connectable plastics article is formed by low-pressure injection moulding.

12. An assembly according to any one of the preceding claims wherein the expandable thermoplastic material comprises from 0.01% to 1% by weight of a solid chemical foaming agent.

13. An assembly according to any one of the preceding claims, wherein the welding element is an electrical resistance or induction heating element.

14. An assembly according to claim 13, wherein the electrical resistance or induction heating element is a flexible metal wire, coil, ring, mesh, strip, perforated strip, or other suitably shaped electrically conductive member.

15. An assembly according to claim 14, wherein the electrical resistance or induction heating element is a bare or uncoated metal wire, coil, ring, mesh, strip or perforated strip.

16. An assembly according to any one of claims 13 to 15, wherein the welding element is an electrical heating element that is in two parts, connected in parallel, and which extend around opposite sides of the assembly.

17. An assembly according to any one of the preceding claims, wherein the welding element is provided with additional void filling material.

18. An assembly according to any one of the preceding claims, wherein one or both of the inter-connectable plastics articles is/are heat recoverable.

19. An assembly according to any one of the preceding claims, in which at least one of the inter-connectable plastics articles is a large diameter sewer pipe.

20. A method of forming a welded joint between first and second inter-connectable plastics articles, wherein at least a first of said inter-connectable plastics articles is formed from an expandable thermoplastics material, which comprises disposing between said first and second plastics articles a welding element and activating the welding element whereby at least a surface of said first plastics article expands to reduce any void space between said first and said second plastics articles in a welding region and said first and said second plastics articles are fused together to form a welded joint.

21. A method according to claim 20, wherein the expandable thermoplastic material comprises a foamed thermoplastic material which expands due to the increase in volume of the pores of the foam when the foamed material is heated and softened.

22. A method according to claim 20, wherein the expandable thermoplastic material comprises a foaming agent such that on activating the welding element, the adjacent expandable thermoplastic material melts and the foaming agent decomposes to produce a volume of gas under pressure thereby expanding the expandable thermoplastic material and filling any voids between the first and second plastics articles in the weld region.

23. A method according to any one of claims 20 to 22, wherein at least a first of said first and second inter-connectable plastics articles is formed by low-pressure injection moulding.

24. A method according to any one of claims 20 to 23, wherein the welding element is an electrical resistance or induction heating element and the method comprises activating the welding element by passing or inducing an electric current therethrough.

25. A method according to claim 24, wherein the welding element is a bare or uncoated wire, coil, ring, mesh, strip or perforated strip.

26. A method according to any one of claims 20 to 25, wherein the welding element is provided with additional void filling material that expands at the welding temperature.

27. A welded joint formed by a method according to any one of claims 20 to 26.

## Amended claims

### Amended claims in accordance with Rule 86(2) EPC.

**25.** A method according to claim 24, wherein the welding element is a bare or uncoated wire, coil, ring, mesh, strip or perforated strip.

**26.** A method according to any one of claims 20 to 25, wherein the welding element is provided with additional void filling material that expands at the welding temperature.

**27.** A welded joint formed by a method according to any one of claims 20 to 26.

**28.** A welding assembly for forming a welded joint between plastics articles, the assembly comprising first and second inter-connectable plastics articles, wherein at least a first of said inter-connectable plastics articles is formed from an expandable thermoplastic material, wherein one or both of the inter-connectable plastics articles is/are heat recoverable and wherein a welding element is disposed between said first and second plastics articles, whereby when said welding element is activated at least a surface layer of said first plastics article expands to reduce any void space between said first and said second plastics articles in a welding region and one or both of the plastics articles recover(s) to provide further joint pressure during the welding step, and said first and said second plastics articles are fused together to form a welded joint.

**29.** A method of forming a welded joint between first and second inter-connectable plastics articles, which comprises:
forming at least a first of said inter-connectable plastics articles by low pressure injection moulding of a thermoplastics material comprising a foaming agent to produce an injection moulded first plastics article having closed pores within the thermoplastic material, or having un-used foaming agent contained within the thermoplastic material;
disposing between said first and second plastics article a welding element comprising an electrical resistance or induction heating element, and activating the welding element whereby at least a surface of said first plastics article expands to reduce any void space between said first and second plastics articles in a welding region and said first and second plastics articles are fused together to form a welded joint.
